# EUROPEAN PATENT SPECIFICATION

(11) **EP 1 451 039 B1**
(45) Date of publication and mention of the grant of the patent: **26.07.2006**
(21) Application number: 02778148.3
(22) Date of filing: 15.10.2002
(51) Int. Cl.: B60R 9/06

(54) **COUPLING DEVICE FOR A LOAD CARRIER**
KUPPLUNGSVORRICHTUNG FÜR EINEN LASTTRÄGER
DISPOSITIF D'ACCOUPLEMENT DESTINE A UN PORTE-CHARGE

(30) Priority: 06.11.2001 SE 0103674
(43) Date of publication of application: 01.09.2004
(73) Proprietor: Thule Sweden AB, 330 33 Hillerstorp (SE); Renault SAS, 92100 Boulogne Billancourt (FR)
(72) Inventor: PREMARTIN, Arnaud, 92120 Montrouge (FR); VEUILLOT, Olivier, 94470 Boissy Saint Leger (FR); ODIN, Hans, 331 41 Värnamo and 2 (SE); PERSON, Joakim, 553 63 Jönköping (SE)
(74) Representative: Davies, Owen Robert Treharne
(86) International application number: PCT/SE2002/001867
(87) International publication number: WO 2003/039912

(56) References cited:
- WO-A1-01/40024
- WO-A1-94/05526

## Description

### Technical field

The present invention relates to a coupling device, for coupling a load carrier to a vehicle, preferably to the rear section of the vehicle. The coupling device comprises a sleeve, which is mounted on the vehicle, and a shaft, which is mounted on the load carrier, and the coupling is realized in that the shaft is mounted into the sleeve, whereupon the shaft is secured in the sleeve by means of a securing device.

### State of the art

Coupling devices of the described type are commonly seen. They generally appear as so-called "hitch mounts" or "hitch posts," primarily on the American market, and there preferably on vehicles such as smaller platform-equipped vehicles, delivery vans and similar vehicles. These devices preferably comprise a sleeve of square material, which is secured to the vehicle, and a shaft consisting of square material, which is secured to the load carrier. The securing device usually consists of a pin that is introduced through holes in the sleeve and shaft, which holes line up with one another when the shaft is mounted in the sleeve. The disadvantage with such earlier hitch devices is that the play that must be present to enable the shaft to be introduced into the sleeve is not taken up by the pin, which means that the load carrier can vibrate forcefully when the vehicle is operated on roads with uneven pavement. These vibrations entail a risk that the cargo carried by the load carrier may be damaged or, in the worst case, come free from the load carrier entirely. Another disadvantage of such earlier devices is that the pin must be inserted into the sleeve from the outside, which means that the sleeve must be readily accessible, making it difficult to conceal, which is perceived on modern cars as a design problem, insofar as the presence of tubes or tow hooks that break the design silhouette of the vehicle is often perceived negatively. Yet another disadvantage is inherent in the adjustment of the shaft and sleeve that must be done in order for the holes realized therein to line up with one another could often be difficult to accomplish, particular when mounting occurs in the dark.

### Problem

A desire thus exists to provide a coupling device of the afore described type that overcomes the vibration problems that encumber earlier devices, that solves these problems without breaking the silhouette of the vehicle with protruding elements, and is designed so that no adjustment of the shaft relative to the sleeve needs to be carried out.

In WO 94/05526, which discloses the features of the preamble of claims 1 and 6 a load carrying arrangement is disclosed in which a connecting shaft is inserted into a recess in a vehicle's coachwork and retained by clamping a hooked arm onto a pin protruding into the recess.

### Solution

The invention now proposed overcomes the aforementioned disadvantages by means of a coupling device of the type described above, characterized in that the securing device is arranged on the shaft.

In a particular embodiment the securing device consists of a lever link which, at a first end, is pivotably arranged on the shaft at the end of the shaft that is mounted to the sleeve and, at a second end, in connection by means of a tension mechanism with the shaft, by means of which tension mechanism the lever link can be pivoted in a direction away from the shaft, whereupon the lever link and the shaft are brought into secure clamping engagement with the sleeve when the shaft is mounted to the sleeve.

In another particular embodiment the sleeve has a pin that extends inside the sleeve between the inner walls of the sleeve and the lever link has a notch that engages with the pin in form-locking fashion, whereupon the secure clamping engagement occurs between the inner walls of the sleeve and the shaft respectively between said pin and notch.

In yet another embodiment, the lever link is acted upon by an elastic element in a direction away from the shaft, whereupon the lever link is pushed against the pin when the shaft is mounted to the sleeve, and whereupon the notch in the lever link snaps into contact with the pin when the shaft is introduced into the sleeve.

In a further embodiment is the circumference of the sleeve confined of the pin and the sleeve walls

### Description of figures

The invention is described below with reference to the accompanying figures, wherein:
Figure 1 is a partial view of the rear section of a vehicle to which a load carrier is coupled;
Figure 2 is a plan view of a coupling device according to the invention;
Figure 3 is a side view of a coupling device according to the invention;
Figures 4 - 6 are side views in partial section of a coupling device according to the invention in three different coupling configurations;
Figure 7 is a view of a coupling device according to the invention as viewed from the side, facing out from the rear section of the vehicle;
Figure 8 is a sectional view of the section A-A in Figure 8;
figure 9 is a sectional view of the section B-B in Figure 3 and
Figure 10 is a view, corresponding to Figure 6, of a somewhat modified coupling device according to the invention.

### Preferred embodiments

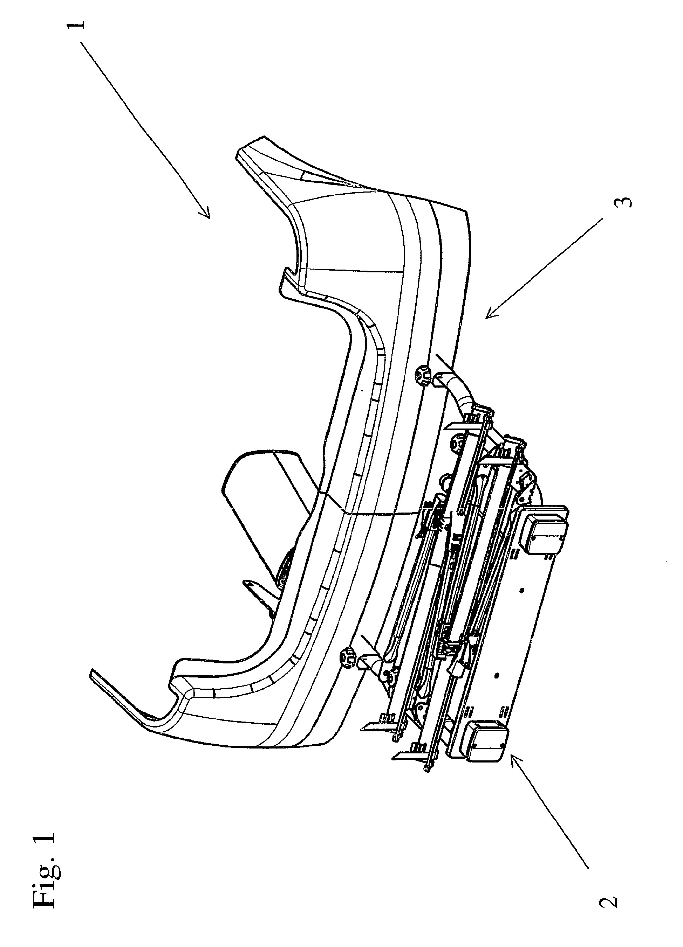

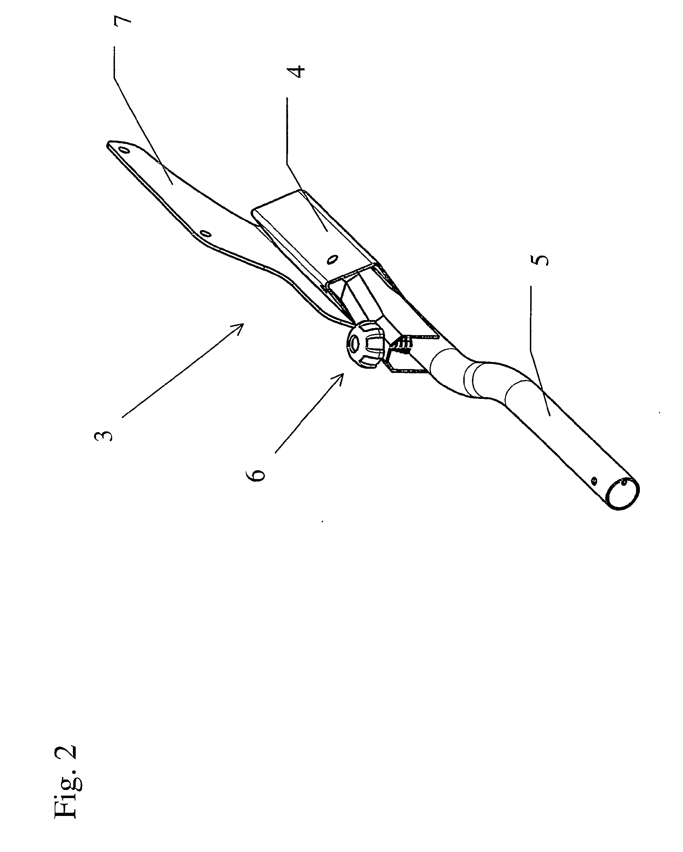

Figure 1 is a schematic view of a rear section 1 of a vehicle. A load carrier 2 is coupled to the rear section by means of coupling devices 3. Figure 2 show that the coupling device 3 comprises a sleeve 4, a shaft 5 and a securing device 6. A mounting plate 7 is arranged on the sleeve 4 and the mounting plate joins the sleeve to the vehicle (not shown in the figure).

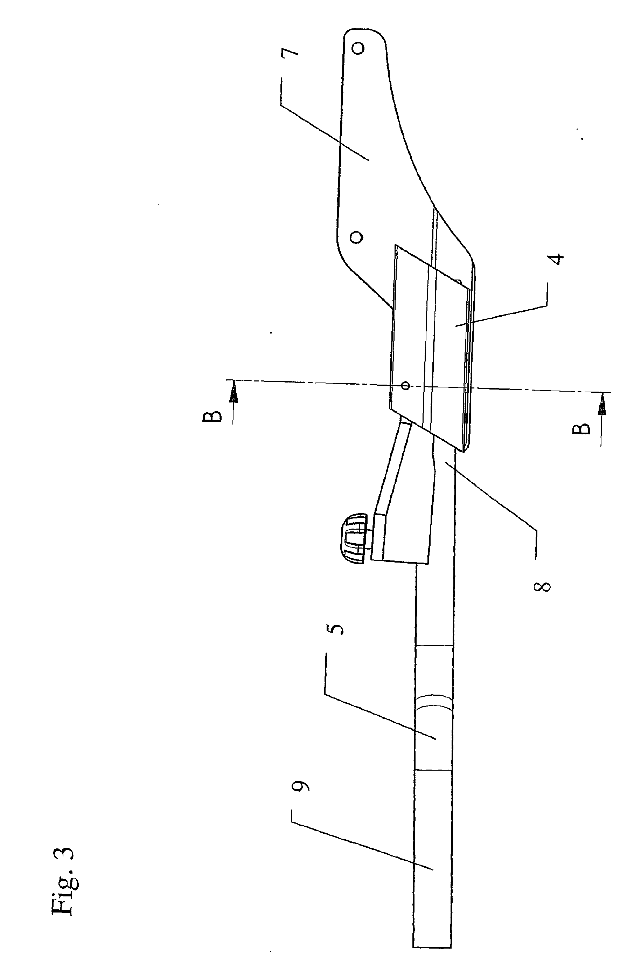

Figure 3 shows that a first end 8 of the shaft 5 is mounted to the sleeve 4, the end 8 is inserted into the sleeve 4. A second end 9 of the shaft 5 is joined to the load carrier 2 (not shown in the figure).

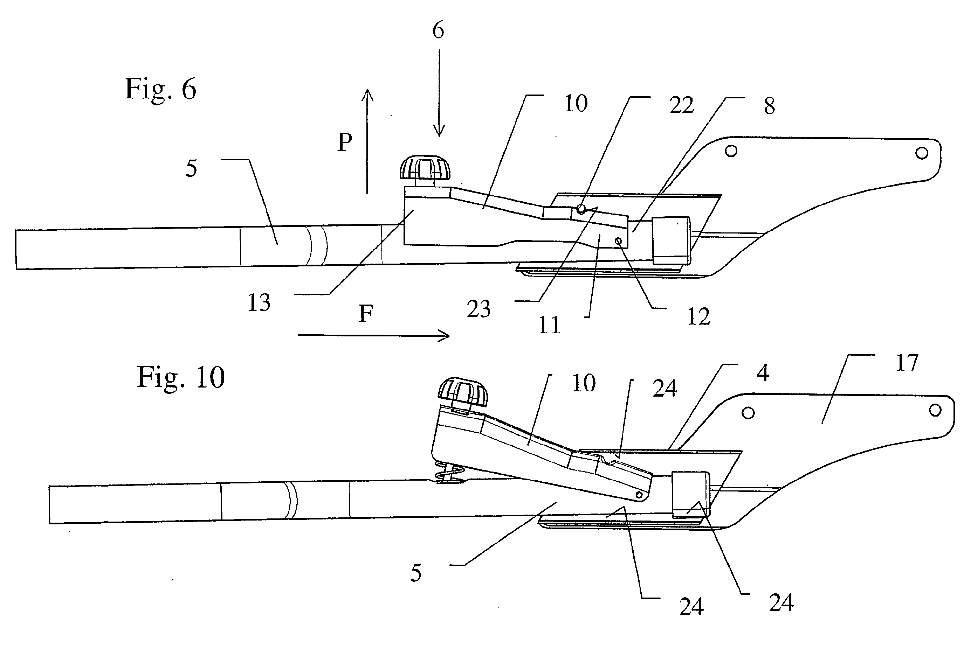

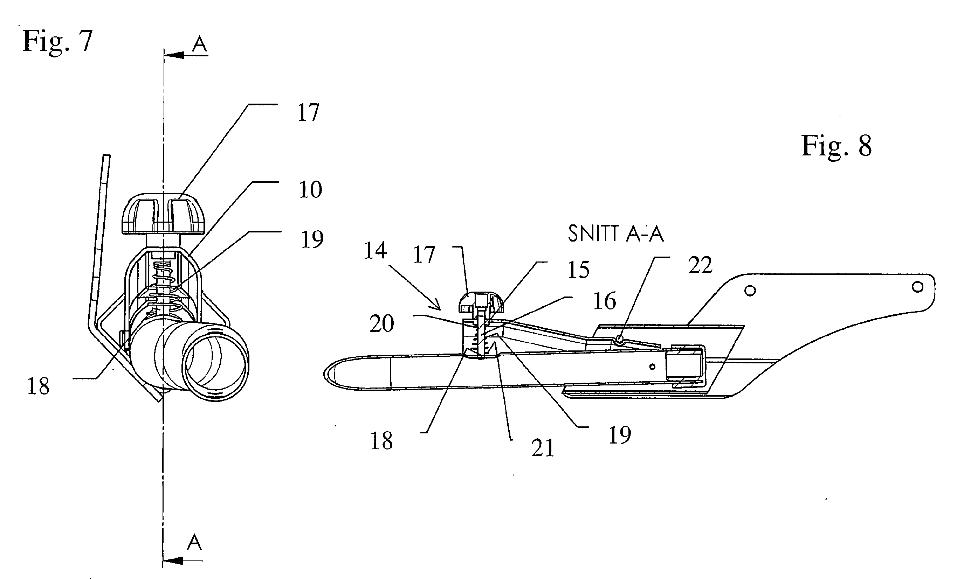

The securing device 6 is described in greater detail below with reference to figures 6 - 8. The securing device comprises a lever link 10 which, at a first end 11, is pivotably connected by means of a pivot axes 12 to the first end 8 of the shaft 5. The lever link 10 extends along the shaft 5 and has at its second end 13 a tension mechanism 14, by means of which the lever link can be pivoted around the pivot axes 12 away from the shaft 5 in the direction indicated by the arrow P.

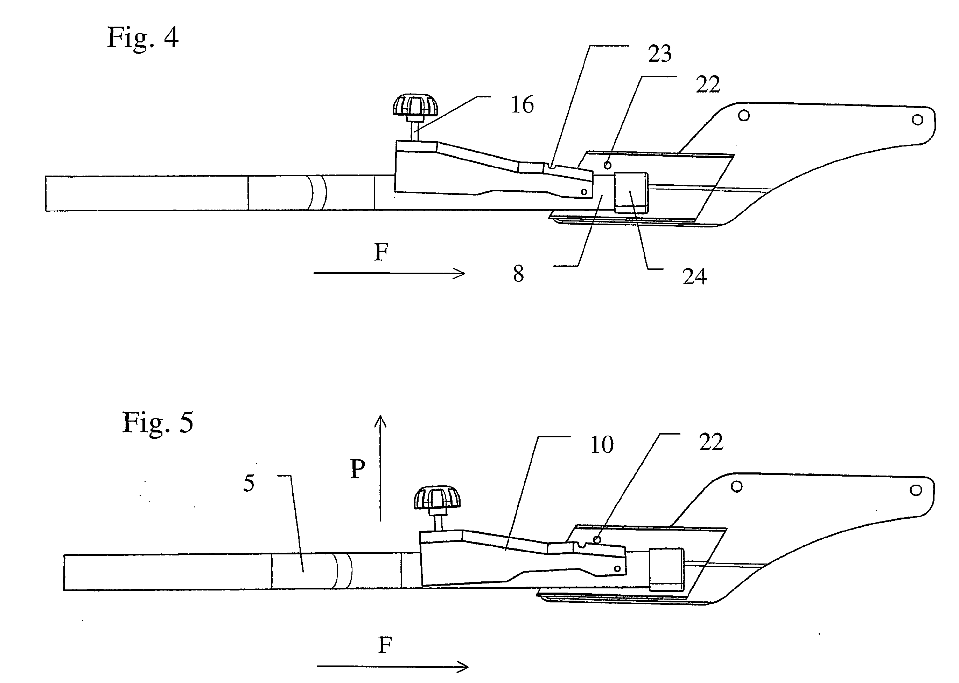

The tension mechanism comprises a nut 15 which is fixedly connected to the lever link in a known manner. A screw 16 cooperates with the nut 15, which screw 16 is equipped with a knob 17. The screw 16 is threaded into the nut 15, and the screw 16 is in abutment with the shaft 5 at the end 18 of the screw opposite to the knob. An elastic element 19, which has the form of a helical spring in the figures, is arranged around the screw 16. The elastic element 19 is connected in a known manner at a first end 20 to the lever link 10, and at a second end 21 in abutment with the shaft 5. It will be apparent to one skilled in the art that the elastic element 19 acts upon the lever link 10 in the direction of the arrow P, and that the lever link can be pushed down toward the shaft 5, see Figure 5, against the force exerted by the elastic element when the screw 16 is screwed up in the direction of the arrow P and thus will not abut the shaft 5.

The lever link is depicted with a U-shaped cross-section and, as shown, the lever link straddles the shaft. This shape is of value per se, in that the lever link is thereby given guidance in relation to the shaft, although this shape is of no importance to the function of the invention, and the lever link may exhibit any cross-section whatsoever that is sufficiently strong to be able to function satisfactorily.

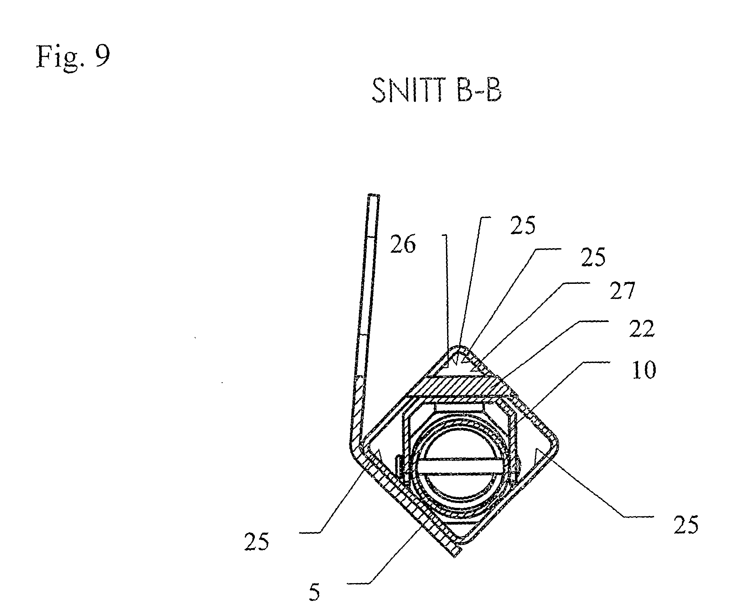

As shown in figures 4 and 9, the sleeve 4 has a pin 22 that extends transversely in the sleeve, while the lever link 10 has a notch 23. The function of the pin and the notch will be described below.

The function of the coupling device will be described below with reference to figure 4 - 9. When a coupling device according to the present invention is to be coupled together, the first end 8 of the shaft 5 is mounted in the sleeve 4 in the manner shown in Figure 4. The end 8 is equipped with a bushing 24, but this bushing has no importance to the invention and will consequently not be described further. In the position shown in Figure 4, the screw 16 has been screwed up to a position such that it is no longer in contact with the shaft 5 (not shown in the figures). The lever link 10 is held in its position by the elastic element 19. The shaft 5 is then moved in the direction of the arrow F to the position shown in Figure 5. In this position the lever link 10 meets the pin 22 and, because the screw 16 has been screwed up, the link 10 will be pushed downward against the shaft 5 towards the force exerted by the elastic element 19 (not visible in the figure), which is working to press the link 10 in the direction of the arrow P. The shaft part 5 is then mowed further into the sleeve 4 in the direction of the arrow F to the position shown in Figure 6 and, in this position, the elastic element 19 (not visible in the figure) snaps the notch 23 into abutment about the pin 22. An indication that the shaft 5 has been mowed to its proper position in the sleeve 4 is thus obtained. In this position the screw 16 is tightened and the lever link 10 is mowed in the direction of the arrow P, whereupon the shaft 5 is pushed against the inner walls 25 of the sleeve 4, while the notch 23 in the lever link 10 is simultaneously pushed against the pin 22 as shown in Figure 9. A stable, secure and non-slipping connection can be achieved between the sleeve and the shaft 5 by forcefully tightening the screw 16, while the pin 22 and the notch 23 simultaneously ensure that the shaft cannot be displaced from the sleeve 4.

Figure 10 shows a coupling device according to the present invention that lacks the pin 22 and, in this arrangement, the connection is realized in that the lever link 10 and the shaft 5 are pushed against the inner walls 24 of the sleeve 4 to produce a fixed and secure connection.

The sleeve part has been depicted in the description above as a square tube, and the shaft part as a round tube. It will be apparent to one skilled in the art that both the sleeve part and the shaft part can exhibit any cross-section whatsoever, assuming that the shaft part can be inserted into the sleeve part. It is also apparent to the one skilled in the art, with regards to the designs where the pin 22 engages with the notch 23, that the wall parts 26 and 27, fig.9, of the sleeve 4 can be omitted. Thereby is the circumference of the sleeve confined of the pin and the remaining parts of the sleeve walls 24 Furthermore, the elastic element 19 has been depicted as a helical spring, but it will be apparent to one skilled in the art that any other elastic element that provides the described function could be used. The invention is thus not limited to the foregoing description, but rather solely by the claims that follow.

## Claims

1. A coupling device (3) for coupling a load carrier (2) to a vehicle, preferably to the rear section (1) of the vehicle, the coupling device comprising a sleeve (4) which is mounted on the rear section of the vehicle and a shaft (5) which is mounted on the load carrier (2), the coupling being realized in that the shaft (5) is mounted into the sleeve (4), whereupon the shaft (5) is secured to the sleeve by means of a securing device (6) which is arranged on the shaft (5), the securing device (6) comprises a lever link (10) that is, at a first end (11), pivotably arranged on the shaft (5) at its first end (8) by means of a pivot axes (12), which first end (8) is mounted to the sleeve (4), **characterized in that** the securing device at a second end (13), is in connection by means of a tension mechanism (14) with the shaft (5), the lever link (10) being pivotable by the tension mechanism in a direction (P) away from the shaft (5), whereupon the lever link (10) and the shaft (5) are brought into secure clamping engagement with the inner walls (25) of the sleeve (4) when the shaft (5) is mounted to the sleeve (4).

2. A coupling device according to claim 1, **characterized in that** the sleeve (4) comprises a pin (22) that extends transversely in the sleeve (4) and **in that** the lever link (10) has a notch (23), the lever link (10) being pivotable by the tension mechanism (14) in a direction (P) away from the shaft such that the notch (23) is brought into engagement with the pin (22), whereby the shaft is brought into secure clamping connection with the sleeve (4) via the engagement between the shaft (5) and the inner walls (25) of the sleeve and respectively between the pin (22) and the notch (23).

3. A coupling device according to claim 2, **characterized in that** the lever link (10) is acted upon by an elastic element (19), which pushes the lever link (10) in a direction (P) away from the shaft, whereupon the lever link is pushed against the pin (22) when the shaft (5) is mounted into the sleeve (4) in a direction (F), whereupon the notch (23) is snapped around the pin (22) when the shaft (5) is moved to a position in which the notch encounters the pin.

4. A coupling device according to claim 2 or 3, **characterized in that** the sleeve (4) circumference is confined of the sleeve walls (24) and the pin (22).

5. A coupling device according to any preceding claim, **characterized in that** the sleeve is a square tube and the shaft is a round tube.

6. A coupling device for coupling a load carrier (2) to the rear section of a vehicle, the coupling device comprising a shaft (5) which is mounted on the load carrier (2) and coupling to the vehicle being realized in that in use the shaft (5) is mounted into a sleeve (4) on the vehicle, whereupon the shaft (5) is secured to the sleeve by means of a securing device (6) which is arranged on the shaft (5), the securing device (6) comprises a lever link (10) that is, at a first end (11), pivotably arranged on the shaft (5) at its first end (8) by means of a pivot axes (12), which first end (8) is mounted to the sleeve (4) **characterized in that** the securing device at a second end (13), is in connection by means of a tension mechanism (14) with the shaft (5), the lever link (10) being pivotable by the tension mechanism in a direction (P) away from the shaft (5), whereupon the lever link (10) and the shaft (5) are brought into secure clamping engagement with the inner walls (25) of the sleeve (4) when the shaft (5) is mounted to the sleeve (4).

7. A coupling device according to any preceding claim, **characterized in that** the tension mechanism (14) comprises a nut (15) fixedly connected to the lever link (10), a screw (16) that co-operates with the nut (15), which screw (16) is equipped with a knob (17), the screw being threaded into the nut and being in abutment with the shaft (5) at the end (18) of the screw opposite the knob.

8. A coupling device according to claim 7, **characterized in that** said coupling device further comprises an elastic element (19) that is arranged around the screw (16) and is connected at a first end (20) to the lever link (10) and at a second end is in abutment with the shaft (5).

9. A coupling device according to claim 8, **characterized in that**, when the screw (16) is screwed up, the lever link (10) can be pushed down towards the shaft (5) against the force exerted by the elastic element (19).

10. A coupling device according to any preceding claim, **characterized in that** the lever link (10) has a U-shaped cross section.

## Patentansprüche

1. Kopplungsvorrichtung (3) zur Koppelung eines Lastenträgers (2) mit einem Fahrzeug, vorzugsweise mit dem Heckabschnitt (1) des Fahrzeugs, wobei die Kopplungsvorrichtung eine Buchse (4) aufweist, die an den Heckabschnitt des Fahrzeugs montiert ist, und eine Stange (5), die an den Lastenträger (2) montiert ist, wobei die Kopplung so verwirklicht ist, dass die Stange (5) in die Buchse (4) montiert ist, woraufhin die Stange (5) mittels einer auf der Stange (5) angeordneten Feststellvorrichtung (6) mit der Buchse fest verbunden wird, die Feststellvorrichtung (6) umfasst einen Hebelverbinder (10), der an einem ersten Ende (11) mittels einer Schwenkachse (12) schwenkbar auf der Stange (5) an deren ersten Ende (8) angeordnet ist, wobei das erste Ende (8) an die Buchse (4) montiert ist, **dadurch gekennzeichnet, dass** die Feststellvorrichtung an einem zweiten Ende (13) mittels eines Spannmechanismusses (14) mit der Stange (5) in Verbindung ist, wobei der Hebelverbinder (10) durch den Spannmechanismus in eine Richtung (P) weg von der Stange (5) schwenkbar ist, woraufhin der Hebelverbinder (10) und die Stange (5) mit den Innenwänden (25) der Buchse (4) in einen festklemmenden Eingriff gebracht werden, wenn die Stange (5) an die Buchse (4) montiert wird.

2. Kopplungsvorrichtung nach Anspruch 1, **dadurch gekennzeichnet, dass** die Buchse (4) einen Stift (22) umfasst, der sich quer innerhalb der Buchse (4) erstreckt, und dass der Hebelverbinder (10) eine Nut (23) aufweist, wobei der Hebelverbinder (10) durch den Spannmechanismus (14) in eine Richtung (P) weg von der Stange schwenkbar ist, so dass die Nut (23) mit dem Stift (22) in Eingriff gebracht wird, wodurch die Stange über den Eingriff zwischen der Stange (5) und den Innenwänden (25) der Buchse und jeweils zwischen dem Stift (22) und der Nut (23) in eine festklemmende Verbindung mit der Buchse (4) gebracht wird.

3. Kopplungsvorrichtung nach Anspruch 2, **dadurch gekennzeichnet, dass** auf den Hebelverbinder (10) durch ein elastisches Element (19) eingewirkt wird, das den Hebelverbinder (10) in eine Richtung (P) weg von der Stange drückt, woraufhin der Hebelverbinder gegen den Stift (22) gedrückt wird, wenn die Stange (5) in eine Richtung (F) in die Buchse (4) montiert wird, woraufhin die Nut (23) um den Stift (22) herum einschnappt, wenn die Stange (5) in eine Stellung bewegt wird, in welcher die Nut auf den Stift trifft.

4. Kopplungsvorrichtung nach Anspruch 2 oder 3, **dadurch gekennzeichnet, dass** der Umfang der Buchse (4) durch die Buchsenwände (24) und den Stift (22) begrenzt wird.

5. Kopplungsvorrichtung nach einem der vorherigen Ansprüche, **dadurch gekennzeichnet, dass** die Buchse ein quadratische Rohr ist und die Stange ein rundes Rohr ist.

6. Kopplungsvorrichtung zur Koppelung eines Lastenträgers (2) mit dem Heckabschnitt eines Fahrzeugs, wobei die Kopplungsvorrichtung eine Stange (5) aufweist, die an den Lastenträger (2) montiert ist, und die Kopplung mit dem Fahrzeug so verwirklicht ist, dass bei Benutzung die Stange (5) in eine Buchse (4) am Fahrzeug montiert ist, woraufhin die Stange (5) mittels einer auf der Stange (5) angeordneten Feststellvorrichtung (6) mit der Buchse fest verbunden wird, die Feststellvorrichtung (6) umfasst einen Hebelverbinder (10), der an einem ersten Ende (11) mittels einer Schwenkachse (12) schwenkbar auf der Stange (5) an deren ersten Ende (8) angeordnet ist, wobei das erste Ende (8) an die Buchse (4) montiert ist, **dadurch gekennzeichnet, dass** die Feststellvorrichtung an einem zweiten Ende (13) mittels eines Spannmechanismusses (14) mit der Stange (5) in Verbindung ist, wobei der Hebelverbinder (10) durch den Spannmechanismus in eine Richtung (P) weg von der Stange (5) schwenkbar ist, woraufhin der Hebelverbinder (10) und die Stange (5) mit den Innenwänden (25) der Buchse (4) in einen festklemmenden Eingriff gebracht werden, wenn die Stange (5) an die Buchse (4) montiert wird.

7. Kopplungsvorrichtung nach einem der vorherigen Ansprüche, **dadurch gekennzeichnet, dass** der Spannmechanismus (14) eine mit dem Hebelverbinder (10) fest verbundene Mutter (15), eine mit der Mutter (15) zusammenwirkende Schraube (16) umfasst, wobei die Schraube (16) mit einem Knauf (17) ausgestattet ist, wobei die Schraube in die Mutter eingeschraubt ist und mit dem Schraubenende (18) entgegengesetzt dem Knauf auf der Stange (5) aufsitzt.

8. Kopplungsvorrichtung nach Anspruch 7, **dadurch gekennzeichnet, dass** die Kopplungsvorrichtung weiterhin ein elastisches Element (19) umfasst, das um die Schraube (16) herum angeordnet ist und an einem ersten Ende (20) mit dem Hebelverbinder (10) verbunden ist und an einem zweiten Ende auf der Stange (5) aufsitzt.

9. Kopplungsvorrichtung nach Anspruch 8, **dadurch gekennzeichnet, dass**, wenn die Schraube (16) hochgeschraubt wird, der Hebelverbinder (10) zur Stange (5) hin entgegen die durch das elastische Element (19) ausgeübte Kraft heruntergedrückt werden kann.

10. Kopplungsvorrichtung nach einem der vorhergehenden Ansprüche, **dadurch gekennzeichnet, dass** der Hebelverbinder (10) einen U-förmigen Querschnitt hat.

## Revendications

1. Dispositif d'accouplement (3) pour l'accouplement d'un porte-charge (2) à un véhicule, préférablement à la section arrière (1) du véhicule, le dispositif d'accouplement comprenant un manchon (4) qui est monté sur la section arrière du véhicule et un arbre (5) qui est monté sur le porte-charge (2), l'accouplement étant réalisé par le fait que l'arbre (5) est monté dans le manchon (4), après quoi l'arbre (5) est fixé au manchon au moyen d'un dispositif de fixation (6) qui est agencé sur l'arbre (5), le dispositif de fixation (6) comprend un bras de levier (10) qui est, à une première extrémité (11), agencé de façon pivotante sur l'arbre (5) à sa première extrémité (8) au moyen d'axes de pivot (12), laquelle première extrémité (8) est montée sur le manchon (4), **caractérisé par le fait que** le dispositif de fixation est connecté à une deuxième extrémité (13) au moyen d'un mécanisme de tension (14) avec l'arbre (5), le bras de levier (10) pouvant être amené à pivoter par le mécanisme de tension dans une direction (P) à l'écart de l'arbre (5), après quoi le bras de levier (10) et l'arbre (5) sont mis en engagement de verrouillage sûr avec les parois intérieures (25) du manchon (4) quand l'arbre (5) est monté dans le manchon (4).

2. Dispositif d'accouplement selon la revendication 1, **caractérisé par le fait que** le manchon (4) comprend un axe (22) qui s'étend transversalement dans le manchon (4) et **par le fait que** le bras de levier (10) comporte une encoche (23), le bras de levier (10) pouvant être amené à pivoter par le mécanisme de tension (14) dans une direction (P) à l'écart de l'arbre, de telle façon que l'encoche (23) est mise en engagement avec l'axe (22), ce par quoi l'arbre est mis en connexion de verrouillage sûr avec le manchon (4) par le biais de l'engagement entre l'arbre (5) et les parois intérieures (25) du manchon et respectivement entre l'axe (22) et l'encoche (23).

3. Dispositif d'accouplement selon la revendication 2, **caractérisé en ce qu'**un élément élastique (19) agit sur le bras de levier (10) et que l'élément élastique pousse le bras de levier (10) dans une direction (P) à l'écart de l'arbre, après quoi le levier est poussé contre l'axe (22) quand l'arbre (5) est monté dans le manchon (4) dans une direction (F), après quoi l'encoche (23) s'enclenche autour de l'axe (22) quand l'arbre (5) est déplacé à une position dans laquelle l'encoche rencontre l'axe.

4. Dispositif d'accouplement selon la revendication 2 ou 3, **caractérisé par le fait que** la circonférence du manchon (4) est emprisonnée par les parois du manchon (24) et l'axe (22).

5. Dispositif d'accouplement selon l'une quelconque des revendications précédentes, **caractérisé par le fait que** le manchon est un tube carré et que l'arbre est un tube rond.

6. Dispositif d'accouplement pour l'accouplement d'un porte-charge (2) à la section arrière d'un véhicule, le dispositif d'accouplement comprenant un arbre (5) qui est monté sur le porte-charge (2) et l'accouplement au véhicule étant réalisé par le fait que, lors de l'utilisation, l'arbre (5) est fixé dans un manchon (4) sur le véhicule, après quoi l'arbre (5) est fixé au manchon au moyen d'un dispositif de fixation (6) qui est agencé sur l'arbre (5), le dispositif de fixation (6) comprend un bras de levier (10) qui est, à une première extrémité (11), agencé de façon pivotante sur l'arbre (5) à sa première extrémité (8) au moyen d'axes de pivot (12), laquelle première extrémité (8) est montée sur le manchon (4), **caractérisé par le fait que** le dispositif de fixation est connecté à une deuxième extrémité (13) au moyen d'un mécanisme de tension (14) avec l'arbre (5), le bras de levier (10) pouvant être amené à pivoter par le mécanisme de tension dans une direction (P) à l'écart de l'arbre (5), après quoi le bras de levier (10) et l'arbre (5) sont mis en engagement de verrouillage avec les parois intérieures (25) du manchon (4) quand l'arbre (5) est monté dans le manchon (4).

7. Dispositif d'accouplement selon l'une quelconque des revendications précédentes, **caractérisé par le fait que** le mécanisme de tension (14) comprend un écrou (15) connecté de manière fixe au bras pivotant (10), une vis (16) qui coopère avec l'écrou (15), laquelle vis (16) est équipée d'un bouton (17), la vis étant vissée dans l'écrou et étant en aboutement avec l'arbre (5) à l'extrémité (18) de la vis opposée au bouton.

8. Dispositif d'accouplement selon la revendication 7, **caractérisé par le fait que** ledit dispositif d'accouplement comprend en outre un élément élastique (19) qui est agencé autour de la vie (16) et qui est connecté à une première extrémité (20) au bras pivotant (10) et qui à une deuxième extrémité est en aboutement avec l'arbre (5).

9. Dispositif d'accouplement selon la revendication 8, **caractérisé par le fait que**, quand la vis (16) est vissée, le bras pivotant (10) peut être poussé vers le bas vers l'arbre (5) contre la force exercée par l'élément élastique (19).

10. Dispositif d'accouplement selon l'une quelconque des revendications précédentes, **caractérisé par le fait que** le bras de levier (10) a une coupe transversale en forme de U.
